(19) **Europäisches Patentamt**

**European Patent Office**

**Office européen des brevets**

(11) Veröffentlichungsnummer: **0 269 685**

**B1**

(12) # EUROPÄISCHE PATENTSCHRIFT

(45) Veröffentlichungstag der Patentschrift:
25.10.89

(51) Int. Cl.⁴: **B 64 F 1/22**

(21) Anmeldenummer: **87903691.1**

(22) Anmeldetag: **14.05.87**

(86) Internationale Anmeldenummer:
**PCT/EP 87/00251**

(87) Internationale Veröffentlichungsnummer:
**WO 87/06910 (19.11.87 Gazette 87/25)**

(54) **SCHLEPPER ZUM BUGSIEREN EINES FLUGZEUGES OHNE SCHLEPPSTANGE.**

(30) Priorität: **17.05.86 DE 3616807**

(43) Veröffentlichungstag der Anmeldung:
**08.06.88 Patentblatt 88/23**

(45) Bekanntmachung des Hinweises auf die Patenterteilung:
**25.10.89 Patentblatt 89/43**

(84) Benannte Vertragsstaaten:
**AT BE CH DE FR GB IT LI LU NL SE**

(56) Entgegenhaltungen:
**DE-A-3 318 077**
**DE-A-3 327 629**
**FR-A-2 454 409**
**GB-A-1 334 800**

(73) Patentinhaber: **MAN Gutehoffnungshütte Aktiengesellschaft, Bahnhofstrasse, 66 Postfach 11 02 40, D-4200 Oberhausen 11 (DE)**

(72) Erfinder: **Schopf, Jörg, Bernsteinstrasse 76, D-7000 Stuttgart 75 (Heumaden) (DE)**

(74) Vertreter: **Wolff, Michael, Dipl.- Phys., Kirchheimer Strasse 69, D-7000 Stuttgart 75 (DE)**

## Beschreibung

Die Erfindung betrifft einen Schlepper zum Bugsieren eines Flugzeuges ohne Schleppstange, mit einem eine nach hinten sowie oben und unten offene Ausnehmung aufweisenden Fahrgestell, das ein durch die Ausnehmung gegabeltes Hinterteil mit einem Paar achsgleich gelagerter, antreibbarer Hinterräder und ein Vorderteil mit zwei lenkbaren, gegebenenfalls antreibbaren, Vorderrädern aufweist; mit einem Paar ungefähr waagrecht, parallel am Fahrgestell angeordneter Zylinder von ersten hydraulischen Zylinder-Kolben-Aggregaten zum Verstellen der Länge zweier Teleskopstangen, die an je einer der beiden seitlichen Begrenzungen der Ausnehmung parallel verstellbar und an ihren freien hinteren Enden je mit einem angelenkten Zugarm versehen sind, der um eine die zugeordnete Stangenachse senkrecht kreuzende, in einer Vertikalebene stehenden Achse über einen rechten Winkel zwischen einer bezüglich des freien Stangenendes relativen Freigabestellung parallel zur Stangenachse und einer diesbezüglichen Sperrstellung quer zur Schlepperachse schwenkbar ist; mit einer am Fahrgestell am vorderen Ende einer Ausnehmung angeordneten, nach hinten und unten abfallenden Unterstützungsfläche für den Hub des Bugfahrwerks bei in Sperrstellung befindlichen Zugarmen und verkürzten Teleskopstangen; und mit einer ein Paar am Fahrgestell angeordneter zweiter hydraulischer Zylinder-Kolben-Aggregate aufweisenden Hubeinrichtung zum Anheben des Bugfahrwerks nach dessen An- und Auflage an bzw. auf der Unterstützungsfläche und Verriegelung mittels der quer gestellten Zugarme.

Bei einem aus der US-PS-4 225 279 (Ursprung: FR-A-2 452 427) bekannten Schlepper gleichen Verwendungszweckes ist eine unten geschlossene Fahrgestellausnehmung vorhanden, die nach hinten sowie oben offen ist und das Bugfahrwerk des ohne Schleppstange zu bugsierenden Flugzeuges in einer Mulde aufnimmt, nachdem eine hinter der Mulde am Schlepperfahrgestell angelenkte Klappe als Rampe schräg auf die Fahrbahn hinabgeschwenkt und das Bugfahrwerk über diese Rampe nach vorn und oben in die Mulde gelangt ist. Dazu muß die Rampe mit ihrer Hinterkante durch Rückwärtsfahren des Schleppers zwischen die ungebremsten Räder des Bugfahrwerks des an seinem Heckfahrwerk gebremsten Flugzeuges einerseits und die Fahrbahn andererseits geschoben werden, wobei hohe Stoßkräfte erforderlich sind, die zu Beschädigungen am Bugfahrwerk, insbesondere seiner Räder, und an der Fahrbahn führen können. Beim relativen Hinauf- und Vorrollen des Bugfahrwerks über die Rampe in die Mulde erzeugt das Gewicht des Flugzeugbuges ein zunehmendes Drehmoment bezüglich der Hinterachse des Schleppers, welches dessen Vorderteil nach oben zu kippen sucht, weshalb es erforderlich ist, den Motor des Schleppers möglichst weit vorn an dessen Fahrgestell anzuordnen und/oder dort Ballast anzubringen, damit die Vorderräder des Schleppers beim Aufnehmen des Bugfahrwerks durch den Schlepper nicht von der Fahrbahn abheben. Die Steuerung dieses Aufnahmevorganges ist im übrigen schwierig.

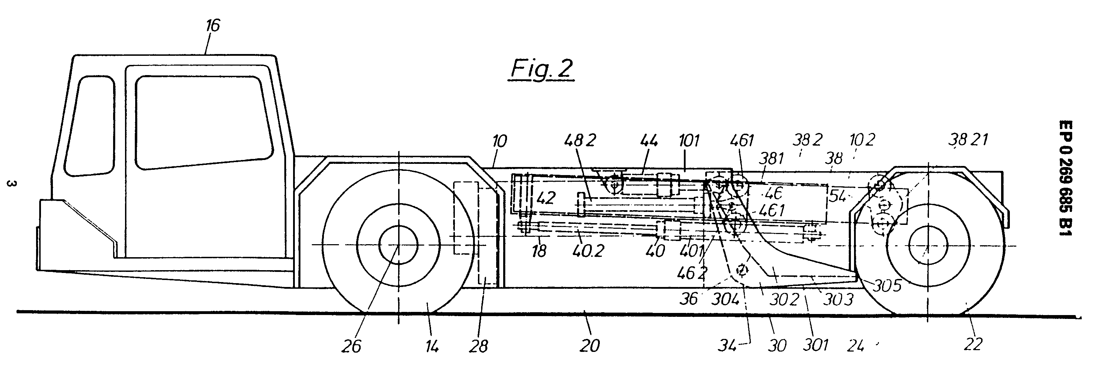

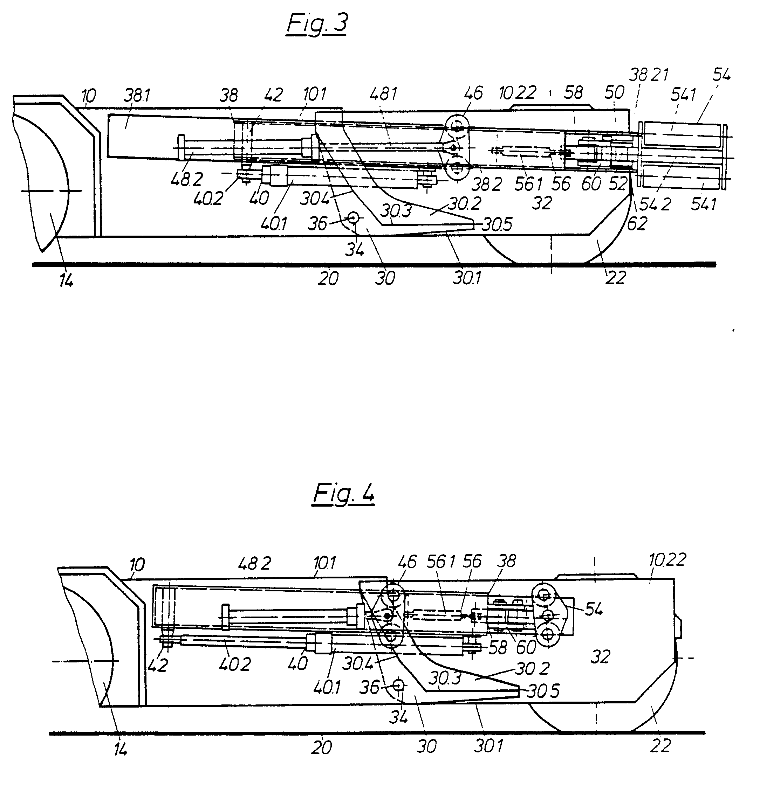

Es ist daher ein zur Vermeidung dieser Nachteile bestimmter und geeigneter, aus der DE-A1-3 318 077 bekannter Schlepper der eingangs genannten Art vorgeschlagen worden, bei welchem (siehe Fig. 2 und 3) die Fahrgestellausnehmung durch einen wenigstens U-förmigen, mittels der Hubeinrichtung heb- und senkbaren, waagrechten, vorübergehend rechteckigen Rahmen begrenzt ist, welcher vorn einen hemmschuhartigen Unterstützungskörper mit der Unterstützungsfläche lagert sowie seitlich durch die beiden Teleskopstangen und hinten gegebenenfalls durch die bei den in Sperrstellung befindlichen, starr miteinander verbundenen Zugarme gebildet ist, bei welchen es sich ebenfalls um hemmschuhartige Unterstützungskörper handelt, die je eine nach vorn und unten abfallende Unterstützungsfläche aufweisen. - Zum Aufnehmen des Bugfahrwerks in die nach hinten offene Fahrgestellausnehmung dieses Schleppers fährt dieser rückwärts, bis sein vorderer Unterstützungskörper an den Bugrädern des erforderlichenfalls gebremsten, jedenfalls stehenden Flugzeugs anschlägt, worauf die beiden Zugarme des Schleppers hinter dem Bugfahrwerk in die Waagrechte hinabgeklappt und gegenseitig verriegelt werden, wobei der Aufnahmerahmen in Rechteckform geschlossen wird.

Es können nun die Teleskopstangen des ungebremst stehenden Schleppers verkürzt werden, wobei der Anschlag der Zugarme an den Bugrädern und darauf das Sich-Selbst-Heranziehen des Schleppers nach hinten erfolgt, bis sein vorderer Unterstützungskörper an den Bugrädern anschlägt, worauf die drei Unterstützungskörper bei Betätigung der Hubeinrichtung das Bugfahrwerk nach oben ziehen. Infolgedessen werden die zwischen dem vorderen Unterstützungskörper einerseits und den beiden hinteren Unterstützungskörpern andererseits befindlichen Bugreifenabschnitte unter der Last (ca. 20 t) des Flugzeugbuges nach unten durchgedrückt sowie vorn und hinten gequetscht, was bei der vorkommenden vielfachen Wiederholung zu einer Reifenbeschädigung am Bugfahrwerk führen kann, wie sie auf andere Weise bei dem bekannten Schlepper mit Rampe und Mulde möglich ist.

Während bei dem bekannten Schlepper mit Rampe und Mulde Schwierigkeiten der Verständigung zwischen Schlepperfahrer und Flugzeugpilot zwecks Betätigung der Fahrwerksbremsen des Flugzeuges vor der Schlepperanfahrt bestehen, welche die Gefahr von unbeabsichtigten Flugzeugbewegungen bzw. von Beschädigungen des Bugfahrwerks und/oder des Schleppers mit sich bringen, bestehen solche Schwierigkeiten bei dem bekannten Schlepper der eingangs genannten Art zumindest dann nicht, wenn sich dieser Schlepper an ein gebremstes Flugzeug heranzieht, das aber auch ungebremst sein kann.

Der Erfindung liegt die Aufgabe zugrunde, einen die genannten Nachteile der beiden bekannten Schlepper vermeidenden Schlepper zum Bugsieren eines Flugzeuges an dessen Bugfahrwerk zu schaffen, welcher die Bugreifen des Flugzeuges beim Aufnehmen des Bugfahrwerks durch den Schlepper sowie beim Anheben des Bugfahrwerks schont und dessen Beschädigung sowie seine Selbstbeschädigung je durch verspätetes Lüften der Fahrwerksbremsen des Flugzeuges mit Sicherheit verhindert.

Diese Aufgabe ist bei einem Schlepper der eingangs genannten Art erfindungsgemäß dadurch gelöst, daß Vorder- und Hinterteil des Fahrgestells getrennt ausgebildet und mittels einer einzigen, zur Hinterachse parallelen Knickachse gelenkig miteinander verbunden sind; daß die ungefähr waagrecht parallel zur Schlepperachse angeordneten zweiten Aggregate je einenends am Vorderteil des Fahrgestells und anderends an dessen Hinterteil angelenkt sind; daß die Zylinder der ersten Aggregate sowie die unbeweglichen Teile der Teleskopstangen am Vorderteil des Fahrgestells gelagert sind und eine die Unterstützungsfläche aufweisende Hubschaufel an diesem Vorderteil hinter der Knickachse befestigt ist; und daß ein Paar ungefähr waagrechter, parallel am Vorderteil des Fahrgestells angeordneter Zylinder von dritten Zylinder-Kolben-Aggregaten vorgesehen ist, deren an je einer der beiden seitlichen Begrenzungen der Ausnehmung des Fahrgestells verstellbar angeordnete Kolbenstangen an ihren freien hinteren Enden mit mindestens einem quer zur Schlepperachse gelenkig angeordneten Halter versehen sind, der ständig in die Ausnehmung des Fahrgestells hineinragt.

Dadurch wird vorteilhafterweise insbesondere erreicht, daß die Bugreifen des Flugzeugs wieder beim Erfassen noch beim Anhub durch eine ungewöhnliche Verformung beansprucht werden, weil die Hubschaufel einen der Fahrbahn entsprechenden Ersatzboden schafft, auf dem die Bugreifen natürlich gewalkt werden; und daß wegen des Gebremstseins des Schleppers und Heranziehens des Flugzeuges dessen Bremsen von vornherein gelöst sein können (und müssen), weshalb eine Verständigung zwischen Pilot und Fahrer überhaupt nicht nötig ist.

Bei einer bevorzugten Ausführungsform des erfindungsgemäßen Schleppers ist die Knickachse zur gelenkigen Verbindung des Vorder- und Hinterteiles des Fahrgestells ungefähr in Höhe der Unterstützungsfläche der Hubschaufel an deren vorderem Ende angeordnet und greifen die zweiten Aggregate ungefähr über der Knickachse am Hinterteil des Fahrgestells an. Dadurch wird ein maximales Hubmoment erreicht.

Bei der bevorzugten Ausführungsform sind die Teleskopstangen und die sie verstellenden ersten Aggregate gegen die Waagrechte nach hinten abfallend geneigt, damit die Zugarme auch geringer dimensionierte Räder des Bugfahrwerks eines kleineren Flugzeuges nicht nach unten auf die Fahrbahn drücken, was die Aufnahme der Bugräder durch die Hubschaufel erschweren würde.

Bei der bevorzugten Ausführungsform sind die Zylinder der ersten Aggregate und die unbeweglichen Teile der Teleskopstangen paarweise derart nebeneinander angeordnet, daß je ein Zylinder und ein fest liegender Hinterteil der Teleskopstangen an bezüglich der Schlepperachse ungefähr diametralen Stellen in der Ausnehmung des Fahrgestells angeordnet sind, und greifen die einseitigen, nach vorn aus den zugeordneten Zylindern herausragenden Kolbenstangen der ersten Aggregate an den vorderen Enden der beweglichen Vorderteile der Teleskopstangen an.

Dadurch wird bei konstantem Druck des hydraulischen Mediums wegen der vollständigen Ausnutzung der Kolben-Fläche eine größere Zugkraft erreicht als bei umgekehrter Anordnung der ersten Aggregate bezüglich der Teleskopstangen. Bei der bevorzugten Ausführungsform sind an den freien Enden der beweglichen Endteile der Teleskopstangen zum Lagern der Zugarme je eine drehfest mit diesen verbundene Stummelwelle, die sich längs der Schwenkachse des ihr zugeordneten Zugarmes ersteckt und drehbar am zugeordneten Teleskopstangenende gelagert ist, und zum Schwenken der Zugarme je ein drehfest mit der zugeordneten Stummelwelle verbundener Schwenkarm sowie ein am zugeordneten beweglichen Teleskopstangenteil gelagerter Zylinder eines vierten hydraulischen Zylinder-Kolben-Aggregates vorgesehen, dessen nach hinten aus dem Zylinder herausragende Kolbenstange gelenkig mit dem stummelwellenfernen Ende des zugeordneten Schwenkarmes gekoppelt ist. Dadurch ist ein fernsteuerbares hydraulisches Schwenken der Zugarme auf einfache Weise möglich.

Bei der bevorzugten Ausführungsform ist jedes vierte Aggregat am beweglichen Endteil der zugeordneten Teleskopstange ungefähr parallel angeordnet sowie das vordere Ende seines Zylinders dort angelenkt und seine Kolbenstange an einem einarmigen Hebel, der einenends schwenkbar am Teleskopstangenendteil gelagert ist, an einer der Schwenkachse des Hebels näher liegenden Stelle angelenkt; und ist ein steifes Koppelglied einenends am anderen Ende des Hebels an einer dessen Schwenkachse ferner liegenden Stelle und anderends am freien Ende des zugeordneten Schwenkarmes angelenkt, wobei alle Gelenkachsen parallel zueinander und zur Schwenkachse des zugeordneten Zugarmes sowie ungefähr vertikal stehen. Infolgedessen überträgt der aus dem einarmigen Hebel und dem Koppelglied bestehende Kniehebel, wenn er gestreckt ist, die Zuggegenkraft auf die Teleskopstange, sodaß die vierten Aggregate nur seine Streckung aufrecht erhalten müssen, also nicht selbst belastet werden.

Bei der bevorzugten Ausführungsform sind die Zugarme und/oder Halter je als Rollenbock ausgebildet, der um eine gegebenenfalls bzw. ständig waagrechte Achse frei drehbar an der zugeordneten Stummelwelle bzw. am freien hinteren Ende der Kolbenstange des zugeordneten dritten Aggregates gelagert ist. Dadurch wird die bei einer einzelnen Rolle linienförmige Berührung des mittels eines Zugarmes zu hintergreifenden und mittels eines Halters niederzuhaltenden Bugrades des zu schleppenden Flugzeuges durch eine mehrfache linienförmige, also quasi flächenhafte gegenseitige Berührung von Rollenbock und Bugrad ersetzt, sodaß das Hintergreifen und Niederhalten auch bei von Flugzeug zu Flugzeug verschiedenem Bugraddurchmesser mit größerer Sicherheit und unter größerer Schonung des Bugreifens erfolgt. - Statt der Rollenböcke können aber auch Einzelrollen verwendet werden, die ebenfalls da für sorgen müssen, daß zwischen den Bugrädern des zu schleppenden Flugzeuges einerseits und den Zugarmen sowie Haltern des Schleppers andererseits die notwendige Rollreibung vorhanden ist.

Bei der bevorzugten Ausführungsform sind die Halter als Haltearme ausgebildet und quer zur Schlepperachse teilweise starr miteinander verbunden, sodaß beide Bugräder des Bugfahrwerkes über die ganze Breite der Hubschaufel, ausgenommen ihre Mitte im Falle von Rollenböcken als Haltearmen, eine einheitliche Anlage erfahren, die ein Zentrieren des bewegten Bugfahrwerkes auf die Längsachse des stillstehenden Schleppers überflüssig macht.

Im folgenden ist die Erfindung anhand der durch die Zeichnung beispielhaft dargestellten bevorzugten Ausführungsform des erfindungsgemäßen Schleppers im einzelnen erläutert. Es zeigt:

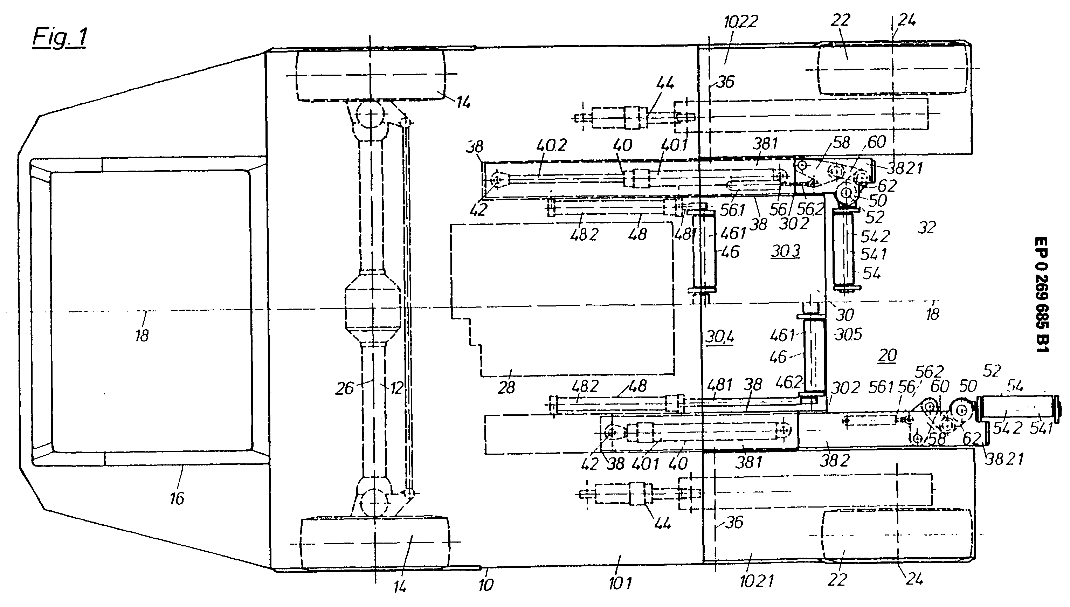

Fig. 1 eine Draufsicht auf die Ausführungsform, wobei die obere und die untere Hälfte den Zustand nach bzw. vor der Aufnahme der Flugzeug-Bugräder wiedergibt;

Fig. 2 eine Seitenansicht der Ausführungsform bei gedachter Räderaufnahme, entsprechend der oberen Hälfte von Fig. 1, sowie

Fig. 3 u. 4 einander entsprechende, vorn abgebrochene Längsschnitte durch die Ausführungsform als Seitenansichten ihrer in Fig. 1 oberen Hälfte vor bzw. nach gedachter Räderaufnahme.

Der erfindungsgemäße Schlepper weist ein im großen und ganzen zweiteiliges Fahrgestell (10) auf, an dessen größerem einheitlichem Vorderteil (10.1) ungefähr in dessen Mitte eine antreibbare Vorderachse (12) mit zwei lenkbaren Vorderrädern (14) gelagert ist und vor der Vorderachse eine Kabine (16) für den Schlepperfahrer aufsitzt. Der Hinterteil (10.2) des Fahrgestells besteht aus einer linken Hälfte (10.2.1) und einer rechten Hälfte (10.2.2), welche bezüglich einer die Längsachse (18) des Schleppers (10) enthaltenden vertikalen Symmetrieebene, die senkrecht auf einer eben gedachten Fahrbahn (20) des Schleppers steht, spiegelbildlich, aber sonst gleich ausgestaltet sind. Jede Hälfte des Fahrgestell-Hinterteiles (10.2) weist ein antreibbares Hinterrad (22) auf, das mit dem gegenüberliegenden zweiten Hinterrad um dieselbe gedachte Querachse (24) läuft, die auf der die Längsachse (18) enthaltenden vertikalen Symmetrieebene senkrecht steht, was auch für die Längsachse (26) der am Fahrgestell-Vorderteil (10.1) gelagerten Abschnitte der Vorderachse (12) gilt. Es ist ein Verbrennungsmotor (28) vorgesehen, der hinter der Vorderachse (26) mittig im Vorderteil (10.1) sitzt und alle Räder (14 und 22) hydrostatisch antreibt.

An seinem hinteren Ende weist der Fahrgestell-Vorderteil (10.1) hinter dem Motor (28) eine Hubschaufel (30) mit einer ebenen, nach hinten ein wenig ansteigenden unteren Auflagefläche (30.1) auf, die bei Drehung des Fahrgestell-Vorderteiles (10.1) um die Vorderachse (26) die Fahrbahn (20) vollflächig berührt. Die um die Vorderachse (26) schwenkbare Hubschaufel (30) erstreckt sich in Richtung der Schlepper-Längsachse (18), die in der vertikalen Symmetrieebene auch der Schaufel enthalten ist, bis zu den beiden Hinterrädern (22) und seitlich bis auf einen bestimmten Abstand ihrer beiden Seitenwangen (30.2) zur benachbarten Hälfte (10.2.1 bzw. 10.2.2) des Fahrgestell-Hinterteiles, welche eine nach hinten sowie oben und unten offene Ausnehmung (32) dieses Hinterteiles seitlich begrenzen.

Der Vorderteil (10.1) und der Hinterteil (10.2) des Fahrgestells sind dadurch gelenkig miteinander verbunden, daß einerseits die linke Hälfte (10.2.1) und andererseits die rechte Hälfte (10.2.2) des Fahrgestell-Hinterteils je ein Drehgelenk (34) bilden, deren Zapfen fluchten und eine Knickachse (36) definieren, welche die Schlepper-Längsachse (18) senkrecht kreuzt und waagrecht ungefähr in Höhe einer nach oben weisenden ebenen Unterstützungsfläche (30.3) der Hubschaufel (30) verläuft. Dabei liegt die Knickachse (36) vor und neben einer an die Unterstützungsfläche (30.3) abgewinkelt anschließenden, nach vorn ansteigenden Auflauffläche (30.4) der Hubschaufel (30) zwischen deren Unterstützungsfläche (30.3) und dem Motor (28).

Zwischen den Wangen (30.2) der Hubschaufel einerseits und der linken bzw. rechten Hälfte des Fahrgestell-Hinterteiles (10.2) andererseits befindet sich je eine den erwähnten seitlichen Abstand überbrückende vierkantige Teleskopstange (38), deren festliegender Teil (38.1) am Fahrgestell-Vorderteil (10.1) befestigt ist und sich zwischen den Vorderrädern (14) einerseits sowie den Hinterrädern (22) andererseits angenähert bis zur Hinterkante (30.5) der Hubschaufel (30), wo deren Unterstützungsfläche (30.3) und Auflagefläche (30.4) zusammenlaufen, in die Ausnehmung (32) des Fahrgestell-Hinterteiles (10.2) hinein erstreckt, wobei der bewegliche Teil (38.2) jeder Teleskopstange axial geführt ist und mit seinem Endabschnitt (38.2.1) auch bei maximaler Verkürzung der Teleskopstangen (38) aus deren zugehörigem festliegendem Teil (38.1) soweit nach hinten herausragt, daß sich ein Überstand über die Hinterkante (30.5) der Hubschaufel ergibt. - Zur Betätigung der Teleskopstangen (38) ist ein Paar erster hydraulischer Zylinder-Kolben-Aggregate (40) vorhanden, die je unterhalb der zugeordneten Teleskopstange liegen und wie diese gegen die Waagrechte nach hinten ein wenig abfallend geneigt angeordnet sind. Die Zylinder (40.1) der ersten Aggregate sind mit beiden Enden an den fest liegenden Teilen (38.1) der Teleskopstangen (38) befestigt. An den vorn herausragenden Enden der Kolbenstangen (40.2) der ersten Aggregate sind Bolzen (42) aufgesteckt, die je durch einen in der ebenen Unterseite des zugeordneten festliegenden Teiles (38.1) einer der Teleskopstangen ausgebildeten Längsschlitz greifen und in dem vorderen Ende des zugeordneten beweglichen Teiles (38.2) dieser Teleskopstange gelagert sind.

Zum Knicken und Strecken des Fahrgestells (10) unter Anhebung bzw. Absenkung der Knickachse (36) ist ein Paar zweiter hydraulischer Zylinder-Kolben-Aggregate (44) vorgesehen, die sich auf beiden Seiten des Schleppers von der Mitte des Motors (28) aus nach hinten bis vor die Knickachse (36) ungefähr waagrecht erstrecken und vorn am Fahrgestell-Vorderteil (10.1) sowie hinten am Fahrgestell-Hinterteil (10.2) angelenkt sind, welches sich nach vorn über die Knickachse (36) hinaus bis zum Motor (28) erstreckt, sodaß die oben liegenden zweiten Aggregate (44) ungefähr über der Knickachse (36), die ungefähr in Höhe der Unterstützungsfläche (30.3) der Hubschaufel an deren vorderem Ende angeordnet ist, am Fahrgestell-Hinterteil (10.2) angreifen.

Die Ausnehmung (32) des Fahrgestell-Hinterteiles (10.2) ist vorn durch zwei quer zur Schlepper-Längsachse (18) starr miteinander verbundene Haltearme (46) begrenzt, die als Rollenböcke mit zwei parallelen Rollen (46.1) gleich ausgebildet und um eine waagrechte Querachse (46.2) an den freien Enden der Kolbenstangen (48.1) eines Paares dritter hydraulischer Zylinder-Kolben-Aggregate (48) gelagert sind, deren Zylinder (48.2) am Fahrgestell-Vorderteil (10.1) in der Höhe zwischen den ersten und zweiten Aggregaten (40 bzw. 44) waagrecht befestigt sind. Die Haltearme (46) sind infolgedessen zwischen einer vorderen Stellung über dem vorderen Ende der Auflauffläche (30.4) der Hubschaufel und einer hinteren Stellung vor der Hinterkante (30.5) der Hubschaufel verschiebbar.

An jedem der zwei hinteren Endabschnitte (38.2.1) der beweglichen Teleskopstangen-Teile (38.2) ist ein gegen die die Schlepper-Längsachse (18) enthaltende Symmetrieebene vorspringendes Auge (50) ausgeformt, an dem eine Stummelwelle (52) so gelagert ist, daß deren Drehachse die Längsachse der zugeordneten Teleskopstange (38) senkrecht kreuzt, also ungefähr vertikal verläuft. An jeder Stummelwelle (52) ist ein Zugarm (54) wiederum in Gestalt eines Rollenbockes mit zwei Rollen (54.1) befestigt, welcher um eine die Achse der zugeordneten Stummelwelle (52) senkrecht schneidende Achse (54.2) drehbar gelagert ist, wobei jeder Zugarm (54) unabhängig vom Zustand der zugeordneten Teleskopstange (38) aus einer Freigabestellung parallel zur Stangenachse in eine Sperrstellung quer zur Schlepper-Längsachse (18) und zurück schwenkbar ist. Dazu ist ein Paar vierter hydraulischer Zylinder-Kolben-Aggregate (56) vorgesehen, die funktionell je zwischen einem Zugarm (54) und dem beweglichen Teil (38.2) der ihm zugeordneten Teleskopstange angeordnet sind. Während der Zylinder (56.1) jedes vierten Aggregates (56) mit seinem vorderen Ende an der ebenen Unterseite des zugeordneten beweglichen Teleskopstangen-Teiles (38.2) angelenkt ist, ist das nach hinten ungefähr in Längsrichtung der Teleskopstange (38) herausragende freie Ende der Kolbenstange (56.2) des vierten Aggregates an einer Ecke eines im wesentlichen dreieckigen, flachen, einarmigen Hebels (58) angelenkt, der mit einer anderen Ecke schwenkbar an der Unterseite des Teleskopstangenteils (38.2) gelagert ist und an dessen dritter Ecke ein flaches steifes Koppelglied (60) an der Unterseite des Teils (38.2) der teleskopstange angelenkt ist, welches seinerseits an dieser Unterseite am freien Ende eines flachen Schwenkarmes (62) angelenkt ist, der am unteren Ende der zugeordneten Stummelwelle (52) befestigt ist. Dabei sind die Achsen aller Drehgelenke, welche in der gegebenen Reihenfolge die Kolbenstange (56.2), den einarmigen Hebel (58), das Koppelglied (60) und den Schwenkarm (62) miteinander verbinden, parallel zur Achse der Stummelwelle (52) angeordnet.

Alle hydraulischen Aggregate sind doppelt wirkend und werden mittels einer an den Motor (28) angeschlossenen Hydropumpe unter Druck gesetzt. Die erforderlichen Fluidleitungen und Steuer-sowie Regelelemente sind vorzusehen.

Das Aufnehmen und Anheben des nicht dargestellten Bugfahrwerkes eines ohne Schleppstange zu bugsierenden Flugzeuges geschieht auf die im folgenden beschriebene Weise.

Ausgangszustand des Schleppers: Durch maximale Verlängerung der zweiten Aggregate (44) ist das Fahrgestell (10) gestreckt; durch maximale Verkürzung der ersten Aggregate (40) sind die zweiteiligen Teleskopstangen (38) maximal verlängert, sodaß sich ihre Endabschnitte (38.2.1) am hinteren Ende des Fahrgestell-Hinterteiles (10.2) befinden; durch maximale Verlängerung der dritten Aggregate (48) sind die Haltearme (46) am hinteren Ende der Hubschaufel (30) angeordnet; durch maximale Verkürzung der vierten Aggregate (56) sind die beiden Zugarme (54) aus der Fahrgestell-Ausnehmung (32) herausgeschwenkt.

In diesem Zustand wird der Schlepper rückwärts gefahren, bis jeder der bei den Haltearme (46) an einem der zwei Bugräder des ungebremsten Bugfahrwerkes anschlägt, das in diesem Augenblick bereits in der nach unten stets offenen, hinteren Hälfte der Ausnehmung (32) zwischen den beiden Hälften des Fahrgestell-Hinterteiles (10.2) steht.

Anschließend wird das noch gestreckte Fahrgestell (10) des stillstehenden, noch nicht gebremsten Schleppers durch allmähliche Verkürzung der zweiten Aggregate (44) in der Mitte nach unten geknickt, bis die Auflagefläche (30.1) der Hubschaufel die Fahrbahn (20) berührt; dabei kommen sich die Radachsen (24 und 26) näher. Nach dem Aufsetzen der Hubschaufel (30) auf die Fahrbahn (20) wird der Schlepper in den Bremszustand versetzt, worauf die beiden Zugarme (54) mittels maximaler Verlängerung der vierten Aggregate (56) als hinterer Abschluß der Fahrgestell-Ausnehmung (32) in diese hineingeschwenkt werden, worauf die ersten Aggregate (40) verlängert werden, bis die Zugarme (54) von hinten her an den Bugrädern anliegen. Nun werden die ersten Aggregate (40) zur weiteren Verkürzung der Teleskopstangen (38) allmählich verlängert und gleichzeitig die dritten Aggregate (48) im gleichen Maße wie die Teleskopstangen verkürzt, wobei die Bugräder des an seinem Fahrwerk ungebremsten Flugzeugs unter Abwälzung an den Bockrollen (46.1 und 54.1) über die Hinterkante (30.5) der Hubschaufel hinweg auf deren Auflagefläche (30.1) nach vorn bis auf eine bestimmte Haltelinie rollen, wo sie durch die Aggregate (40 und 48) blockiert werden. Darauf folgt das Strecken des geknickten Fahrgestells (10) mittels der allmählich länger werdenden zweiten Aggregate (44), wobei sich die Hubschaufel (30) nach oben bewegt und das auf ihrer Auflagefläche (30.1) stehende Bugfahrwerk des Flugzeuges anhebt. Nach Lösen der Bremsen des Schleppers kann dieser in Bewegung gesetzt werden und das Flugzeug dadurch bugsieren.

Zum Absenken und Herausgeben des Bugfahrwerkes werden die zuvor geschilderten Maßnahmen in umgekehrter Reihenfolge durchgeführt.

**Patentansprüche**

1. Schlepper zum Bugsieren eines Flugzeuges ohne Schleppstange, mit einem eine nach hinten sowie oben und unten offene Ausnehmung (32) aufweisenden Fahrgestell (10), das ein durch die Ausnehmung (32) gegabeltes Hinterteil (10.2) mit einem Paar achsgleich gelagerter, antreibbarer Hinterräder (22) und ein Vorderteil (10.1) mit zwei lenkbaren, gegebenenfalls antreibbaren, Vorderrädern (14) aufweist; mit einem Paar ungefähr waagrecht, parallel am Fahrgestell (10) angeordneter Zylinder (40.1) von ersten hydraulischen Zylinder-Kolben-Aggregaten (40) zum Verstellen der Länge zweier Teleskopstangen (38), die an je einer der beiden seitlichen Begrenzungen (10.2.1 und 10.2.2) der Ausnehmung (32) parallel verstellbar und an ihren freien hinteren Enden (38.2.1) je mit einem angelenkten Zugarm (54) versehen sind, der um eine die zugeordnete Stangenachse (von 38) senkrecht kreuzende, in einer Vertikalebene stehenden Achse (von 52) über einen rechten Winkel zwischen einer bezüglich des freien Stangenendes (38.2.1) relativen Freigabestellung parallel zur Stangenachse und einer diesbezüglichen Sperrstellung quer zur Schlepperachse (18) schwenkbar ist; mit einer am Fahrgestell (10) am vorderen Ende seiner Ausnehmung (38) angeordneten, nach hinten und unten abfallenden Unterstützungsfläche (30.3) für den Hub des Bugfahrwerkes bei in Sperrstellung befindlichen Zugarmen (54) und verkürzten Teleskopstangen (38); und mit einer ein Paar am Fahrgestell (10) angeordneter zweiter hydraulischer Zylinder-Kolben-Aggregate (44) aufweisenden Hubeinrichtung zum Anheben des Bugfahrwerkes nach dessen An- und Auflage an bzw. auf der Unterstützungsfläche (30.3) und Verriegelung mittels der quergestellten Zugarme (54), dadurch gekennzeichnet, daß Vorder- und Hinterteil (10.1 bzw. 10.2) des Fahrgestells (10) getrennt ausgebildet und mittels einer einzigen, zur Hinterachse (24) parallelen Knickachse (36) gelenkig miteinander verbunden sind; daß die ungefähr waagrecht parallel zur Schlepperachse (18) angeordneten zweiten Aggregate (44) je einenends am Vorderteil (10.1) des Fahrgestells (10) und andernends an dessen Hinterteil (10.2) angelenkt sind; daß die Zylinder (40.1) der ersten Zylinder-Kolben-Aggregate (40) sowie die unbeweglichen Teile (38.1) der Teleskopstangen (38) am Vorderteil (10.1) des Fahrgestells (10) gelagert sind und eine die Unterstützungsfläche (30.3) aufweisende Hubschaufel (30) an diesem Vorderteil (10.1) hinter der Knickachse (36) befestigt ist; und daß ein Paar ungefähr waagrechter, parallel am Vorderteil (10.1) des Fahrgestells (10) angeordneter Zylinder (48.2) von dritten Zylinder-Kolben-Aggregaten (48) vorgesehen ist, deren an je einer der beiden seitlichen Begrenzungen (10.2.1 und 10.2.2) der Ausnehmung (32) des Fahrgestells (10) verstellbar angeordnete Kolbenstangen (48.1) an ihren freien hinteren Enden mit mindestens einem quer zur Schlepperachse (18) gelenkig angeordneten Halter (46) versehen sind, der ständig in die Ausnehmung (32) des Fahrgestells (10) hineinragt.

2. Schlepper nach Anspruch 1, dadurch gekennzeichnet, daß die Knickachse (36) ungefähr in Höhe der Unterstützungsfläche (30.3) der Hubschaufel (30) an deren vorderem Ende angeordnet ist und die zweiten Zylinder-Kolben-Aggregate (44) ungefähr über der Knickachse (36) am Hinterteil (10.2) des Fahrgestells (10) angreifen.

3. Schlepper nach Anspruch 1 oder 2, dadurch gekennzeichnet, daß die Teleskopstangen (38) und die sie verstellenden ersten Zylinder-Kolben-Aggregate gegen die Waagrechte (18) nach hinten abfallend geneigt sind.

4. Schlepper nach einem der Ansprüche 1 bis 3, dadurch gekennzeichnet, daß die Zylinder (40.1) der ersten Zylinder-Kolben-Aggregate (40) und die unbeweglichen Teile (38.1) der Teleskopstangen (38) paarweise derart nebeneinander angeordnet sind, daß je ein Zylinder (40.1) und ein festliegender Hinterteil (38.1) der Teleskopstange (38) an bezüglich der Schlepperachse (18) ungefähr diametralen Stellen in der Ausnehmung (32) des Fahrgestells (10) angeordnet sind, und daß die einseitigen, nach vorn aus den zugeordneten Zylindern (40.1) herausragenden Kolbenstangen (40.2) der ersten Zylinder-Kolben-Aggregate (40) an den vorderen Enden der beweglichen Vorderteile (38.2) der Teleskopstangen (38) angreifen.

5. Schlepper nach einem der Ansprüche 1 bis 4, dadurch gekennzeichnet, daß an den freien Enden (38.2.1) der beweglichen Endteile der Teleskopstangen (38) zum Lagern der Zugarme (54) je eine drehfest mit diesen verbundene Stummelwelle (52), die sich längs der Schwenkachse des ihr zugeordneten Zugarmes (54) erstreckt und drehbar am zugeordneten Teleskopstangenende (38.2.1) gelagert ist, und zum Schwenken der Zugarme (54) je ein drehfest mit der zugeordneten Stummelwelle (52) verbundener Schwenkarm (62) sowie ein am zugeordneten beweglichen Teleskopstangenteil (38.2) gelagerter Zylinder (56.1) eines vierten hydraulischen Zylinder-Kolben-Aggregates (56) vorgesehen sind, dessen nach hinten aus dem Zylinder (56.1) herausragende Kolbenstange (56.2) gelenkig mit dem stummelwellenfernen Ende des zugeordneten Schwenkarmes (62) gekoppelt ist.

6. Schlepper nach Anspruch 5, dadurch gekennzeichnet, daß jedes vierte Zylinder-Kolben-Aggregat (56) am beweglichen Endteil (38.2) der zugeordneten Teleskopstange (38) ungefähr parallel angeordnet sowie das vordere Ende seines Zylinders (56.1) dort angelenkt ist und seine Kolbenstange (56.2) an einem einarmigen Hebel (58), der einenends schwenkbar am Teleskopstangenendteil (38.2.1) gelagert ist, an einer der Schwenkachse des Hebels (58) näherliegenden Stelle angelenkt ist; und daß ein steifes Koppelglied (60) einenends am anderen Ende des Hebels (58) an einer dessen Schwenkachse fernerliegenden Stelle und andernends am freien Ende des zugeordneten Schwenkarmes (62) angelenkt ist, wobei alle Gelenkachsen parallel zueinander und zur Schwenkachse des zugeordneten Zugarmes (54) sowie ungefähr vertikal stehen.

7. Schlepper nach einem der Ansprüche 1 bis 6, dadurch gekennzeichnet, daß die Zugarme (54) und/oder Halter (46) je als Rollenbock ausgebildet sind, der um eine gegebenenfalls bzw. ständig waagrechte Achse (54.2 bzw. 46.2) frei drehbar an der zugeordneten Stummelwelle (52) bzw. am freien hinteren Ende der Kolbenstange (48.1) des zugeordneten dritten Zylinder-Kolben-Aggregates (48) gelagert ist.

8. Schlepper nach einem der Ansprüche 1 bis 7, dadurch gekennzeichnet, daß die Halter als Haltearme (46) ausgebildet und quer zur Schlepperachse (18) starr miteinander verbunden sind.

## Claims

1. Tractor, for towing an aircraft without towbar, with a chassis (10), which displays a recess (32) that is open to the rear as well as upwardly and downwardly, a rear part (10.2) forked by the recess (32) and with a pair of co-axially borne, drivable rear wheels (22) and a front part (10.1) with two steerable likewise drivable front wheels (14), with a pair of cylinders (40.1), which are arranged parallelly and approximately horizontally at the chassis (10), of first hydraulic piston-cylinder units (40) for adjusting the length of two telescopic rods (38), which are each adjustable parallelly at a respective one of both the lateral boundaries (10.2.1 and 10.2.2) of the recess (32) and are provided at each of their free rear ends (38.2.1) with a respective articulatedly mounted pull-rod (54), which is pivotable transversely to the tractor axis (18) about an axis (of 52), which stands in a vertical plane and crosses the associated rod axis (of 38) perpendicularly, through a right angle between a release setting which is relative with respect to the free rod end (38.2.1) and a locking setting with respect thereto, with a suporting surface (30.3), which is arranged at the chassis (10) at the front end of its recess (32) and falling away rearwardly and downwardly, for the lift of the front landing gear when the pull-rods (54) are disposed in locking setting and the telescopic rods (38) are shortened, and with a lifting equipment, which displays a pair of second hydraulic piston-cylinder units (44) arranged at the chassis (10), for the lifting of the front landing gear after its bearing and resting at or on the supporting surface (30.3) and latching by means of the pull arms (54) set transversely, characterised thereby, that the front part (10.1) and the rear part (10.2) of the chassis (10) are constructed separately and articulatedly connected together by means of a single kink axle (36) parallel to the rear axle (24), that the second units (44), which are arranged parallelly to the tractor axis (18) and approximately horizontally, are each articulated by one end to the front part (10.1) of the frame (10) and by the other end to its rear part (10.2), that the cylinders (40.1) of the first hydraulic piston-cylinder units (40) as well as the immovable parts (38.1) of the telescopic rods (38) are borne at the front part (10.1) of the frame (10) and a lifting bucket (30) displaying the supporting surface (30.3) is fastened at this front part (10.1) behind the kink axle (36), and that a pair of cylinders (48.2) which are arranged parallelly and approximately horizontally at the front part (10.1) of the frame (10), of third piston-cylinder units (48) is provided, the piston rods (48.1) of which are each arranged at a respective one of both the lateral boundaries (10.2.1 and 10.2.2) of the recess (32) of the chassis (10) and provided at their free rear ends with at least one holder (46), which is articulatedly arranged transversely to the tractor axis (18) and constantly projects into the recess (32) of the chassis (10).

2. Tractor according to claim 1, characterised thereby, that the kink axle (36) is arranged approximately at the height of the supporting surface (30.3) of the lifting bucket (30) at its front end and the second piston-cylinder units (44) engage at the rear part (10.2) of the chassis (10) approximately above the kink axle (36).

3. Tractor according to claim 1 or 2, characterised thereby, that the telescopic rods (38) and the first piston-cylinder units adjusting them are inclined to be falling away rearwardly relative to the horizontal (18).

4. Tractor according to one of the claims 1 to 3, characterised thereby, that the cylinders (40.1) of the first hydraulic piston-cylinder units (40) and the immovable parts (38.1) of the telescopic rods (38) are arranged in pairs one beside the other in such a manner that a respective cylinder (40.1) and a respective fixed rear part (38.1) of the telescopic rod (38) are arranged in the recess (32) of the chassis (10) at approximately diametral places with respect to the tractor axis (18) and that the one-sided piston rods (40.2) of the first hydraulic piston-cylinder units (40) project forwardly out of the associated cylinders (40.1) and engage at the front ends of the mowable front parts (38.2) of the telescopic rods (38).

5. Tractor according to one of the claims 1 to 4, characterised thereby, that provided at the free ends (38.2.1) of the movable end parts of the telescopic rods (38), there are - for the bearing of the pull arms (54) - a respective stub shaft (52), which is connected secure against rotation with each of these, extends along the pivot axis of the associated pull arm (54) and which is rotatably borne at the associated telescopic rod end (38.2.1), and - for the pivotation of the pull arms (54) - a respective pivot arm (62), which is connected secure against rotation with the associated stub shaft (52), as well as a cylinder (56.1), which is borne at the associated movable telescopic rod part (38.2), of a fourth piston-cylinder unit (56), the piston rod (56.2) of which projecting out to the rear from the cylinder (56.1) is articulatedly coupled with that end of the associated pivot arm (62), which is remote from the stub shaft.

6. Tractor according to claim 5, characterised thereby, that each fourth piston-cylinder unit (56) is arranged approximately parallelly at the movable end part (38.2) of the associated telescopic rod (38) as well as the front end of its cylinder (56.1) is articulated there and its piston rod (56.2) is articulated at a one-armed lever (58), which at one end is pivotably borne at the telescopic rod end part (38.2.1), at a place lying nearer to the pivot axis of the lever (58), and that a stiff coupling member (60) at one end is articulated at the other end of the lever (58) at a place lying further from its pivot axis and at the other end is articulated at the free end of the associated pivot arm (62), wherein all hinge axes stand parallelly one to the other and to the pivot axis of the associated pull arm (54) as well as approximately vertically.

7. Tractor according to one of the claims 1 to 6, characterised thereby, that the pull arms (54) and/or holders (46) are each constructed as pulley block which borne at the associated stub shaft (52) or at the free rear end of the piston rod (48.1) of the associated third piston-cylinder unit (48) to be freely rotatable about an axis (54.2 or 46.2) which is in a given case or constantly horizontal.

8. Tractor according to one of the claims 1 to 7, characterised thereby, that the holders are constructed as retaining arms (46) and rigidly connected one with the other transversely to the tractor axis (18).

**Revendications**

1. Tracteur pour remorquer un avion sans tige de remorquage, comportant un châssis présentant un évidement (32) ouvert sur l'arrière ainsi qu'audessus et au-dessous, qui présente une partie arrière (10.2) ramifiée en fourche par l'évidement (32) avec une paire de roues arrière (22) montées sur le même axe et susceptibles d'être entraînées et une partie avant (10.1) comportant deux roues avant (14) orientales, susceptibles d'être entraînées le cas échéant; avec une paire de vérins (40.1) disposés à peu près horizontalement, parallèles au châssis (10), d'un premier groupe vérin-piston hydraulique (40) pour régler la longueur de deux tiges télescopiques (38) réglables en parallèle à chacune des deux délimitations latérales (10.2.1 et 10.2.2) de l'évidement (32) et pourvues chacune à leur extrémité libre arrière (38.2.1) d'un bras de traction articulé (54) qui est pivotant autour d'un axe (52) situé dans un plan vertical, croisant perpendiculairement l'axe de tige (38) lui étant affecté, le pivotement s'effectuant à angle droit, entre une position de dégagement (38.2.1) relative par rapport à l'extrémité libre de tige, parallèlement à l'axe de tige et une position de blocage correspondante et transversale par rapport à l'axe du tracteur (18), avec une surface d'appui disposée (30.3) sur le châssis (10), à l'extrémité avant de son évidement (38), inclinée vers l'arrière et vers le bas pour la course du train d'atterrissage avant lorsque les bras de traction (54) se trouvent en position de blocage et que les tiges télescopiques (38) sont raccourcies; et avec un dispositif de levée présentant une paire de seconds groupes vérin-piston hydrauliques (44) disposés sur le châssis (10), destiné à lever le train d'atterrissage à la suite de son accostage et de son appui contre et sur la surface d'appui (30.3) et pour effectuer un verrouillage au moyen des bras de traction (54) placés transversalement, caractérisé en ce que la partie avant et la partie arrière (10.1 et 10.2) du châssis (10) sont réalisées séparément et sont reliées entre elles de manière articulées au moyen d'un unique axe de basculement (36) parallèle à l'essieu arrière (24); en ce que les seconds groupes (44) disposés à peu près horizontalement, parallèlement à l'axe du tracteur (18) sont chacun articulés à la partie avant (10.1) du châssis (10) et, à l'autre extrémité, sur sa partie arrière (10.2); en ce que les cylindres (40.1) du premier groupe (40) ainsi que les parties non-mobiles (38.1) des tiges télescopiques (38) sont montés sur la partie avant (10.1) du châssis (10) et qu'une plaque de levage (30) présentant la surface d'appui (30.3) est fixée sur cette partie avant (10.1), derrière l'axe de basculement (36); et en ce qu'une paire de cylindres (48.2) disposée à peu près horizontalement, parallèlement à la partie avant (10.01) du châssis (10) appartenant à des troisièmes groupes vérin-piston (48) est prévue, dont les tiges de piston (48.1) disposées réglables sur chacune des deux délimitations latérales (10.2.1 et 10.2.2) de l'évidement (32) du châssis (10) sont pourvues leurs extrémités arrière libres d'au moins un support (46) articulé transversalement par rapport à l'axe du tracteur (18) et émergeant constamment dans l'évidement (32) du châssis (10).

2. Tracteur selon la revendication 1, caractérisé en ce que l'axe de basculement (36) est disposé à peu près au niveau de la surface d'appui (30.3) de la plaque de levage (30), à son extrémité avant, et les seconds groupes vérin-piston (44) s'engageant à peu près sur l'axe de basculement (36), à la partie arrière (10.2) du châssis (10).

3. Tracteur selon la revendication 1 ou 2, caractérisé en ce que les tiges télescopiques (38) et les premiers groupes vérin-piston les réglant sont inclinés par rapport à l'horizontale (18) en descendant vers l'arrière.

4. Tracteur selon l'une des revendications 1 à 3, caractérisé en ce que les vérins (40.1) des premiers groupes vérin-piston (40) et les parties non-mobiles (38.1) des tiges télescopiques (38) sont disposées par paires les uns à côté des autres, de manière que chaque fois un vérin (40.1) et une partie arrière fixe (38.1) de la tige télescopique (38) soient disposés à des endroits à peu près diamétralement opposés, par rapport à l'axe du tracteur (18), dans l'évidement (32) du châssis (10), et en ce que les tiges de piston (40.2) des premiers groupes vérin-piston (40) émergeant vers l'avant hors de des vérins (40.1) correspondants s'engagent sur les extrémités avant des parties avant mobiles (38.2) des tiges télescopiques (38).

5. Tracteur selon l'une des revendications 1 à 4, caractérisé en ce qu'aux extrémités libres (38.2.1) des parties d'extrémités mobiles des tiges télescopiques (38) et dans le but de supporter les bras de traction (54), il est chaque fois monté un tronçon d'arbre (52) relié fixe en rotation à ceux-ci et s'étendant le long de l'axe de pivotement du bras de traction (54) qui lui est affecté, tournant sur l'extrémité de tige télescopique (38.2.1) qui lui est affectée, et qu'il est prévu, dans le but de faire pivoter chaque bras de traction (54), un bras pivotant (62) relié fixe en rotation au tronçon d'arbre (52) qui lui est affecté ainsi qu'un cylindre (56.1) d'un quatrième groupe vérin-piston (56) monté sur la partie de tige télescopique (38.2) qui lui est affectée et dont la tige de piston émergeant vers l'arrière hors du cylindre (56.1) est couplée de manière articulée avec l'extrémité éloignée du tronçon d'arbre du bras pivotant (62) qui lui est affecté.

6. Tracteur selon la revendication 5, caractérisé en ce que chaque quatrième groupe vérin-piston (56) est disposé à peu près parallèlement sur la partie d'extrémité mobile (38.2) de la tige télescopique (38) qui lui est affectée ainsi que l'extrémité avant de son cylindre étant articulé à cet endroit et sa tige de piston (56.2) étant articulé sur un levier à un bras (58) monté pivotant à une extrémité sur la partie d'extrémité de tige télescopique (38.2.1), en un point situé plus près de l'axe de pivotement du levier (58); et en ce qu'un organe de couplage (60) rigide est articulé à une extrémité sur l'autre extrémité du levier (58), en un point situé plus loin de son axe de pivotement, et articulé, à l'autre extrémité, à l'extrémité libre du bras pivotant (62) lui étant affecté, tous les axes d'articulation étant situés parallèlement, les uns par rapport aux autres et par rapport à l'axe de pivotement du bras de traction (54) leur étant affecté, ainsi qu'à peu près verticalement.

7. Tracteur selon l'une des revendications 1 à 6, caractérisé en ce que les bras de traction (54) et/ou les supports (46) sont chacun réalisés sous la forme de transporteurs à galets montés autour d'un axe (54.1 et 46.2) qui est, le cas échéant, constamment horizontal, librement tournant sur le tronçon d'arbre (52) leur étant affecté ou à l'extrémité arrière libre de la tige de piston (48.1) du troisième groupe vérin-piston (48) leur étant affecté.

8. Tracteur selon l'une des revendications 1 à 7, caractérisé en ce que les supports sont réalisés sous la forme de bras de maintien (46) et rigidement reliés entre eux transversalement à l'axe du tracteur (18).

Fig. 1

Fig.2

## Fig. 3

## Fig. 4